# EUROPÄISCHE PATENTANMELDUNG

(11) **EP 2 014 440 A1**
(43) Veröffentlichungstag der Anmeldung: **14.01.2009**
(21) Anmeldenummer: 07013760.9
(22) Anmeldetag: 13.07.2007
(51) Int. Cl.: B29C 45/14

(54) **Direktbeschichtet Insert Molding - Dekorfolien und Laminate**

(71) Anmelder: Hueck Folien Ges.m.b.H., 4342 Baumgartenberg (AT)
(72) Erfinder: Bergsmann, Martin, Dr., Dipl.-Ing., 4020 Linz (AT); Aigner, Johann, 4352 Klam (AT); Lindmeier, Thomas, Dipl.-Ing., 4224 Wartberg ob der Aist (AT); Leonhartsberger, Johann, Georg, 4222 Luftenberg (AT); Berger, Markus, Dr., 95326 Kulmbach (DE)
(74) Vertreter: Landgraf, Elvira

(57) **Zusammenfassung**

Die Erfindung betrifft hinterspritzbare Folien bzw. bahnförmige Laminate, aufweisend eine Trägerfolie die mit einer Dekorbeschichtung oder einer beschichteten Dekorfolie versehen ist und/oder mit einer Schutzlackschicht versehen ist. Die Folien bzw. Laminate können durch Pressformen in die gewünschte Form gebracht werden. Die beschichtete Dekorfolie oder Trägerfolie weist eine metallische Beschichtung auf.

## Beschreibung

Die Erfindung betrifft beschichtete verformbare Folien und bahnförmige Laminate, die mit Kunststoff hinterspritzt werden können.

Dekorativ veredelte Kunststoffspritzgussteile werden beispielsweise in der Autoindustrie, in der Architektur, für Haushaltsgeräte, Spielwaren, Sportartikel und sonstige Gebrauchsgegenstände eingesetzt.

Üblicherweise werden dekorative Folien auf Kunststoffspritzgussformlingen durch Heißprägefolien oder Transferfolien gebildet, die mit einer Schutzfolie versehen sein können. Nach dem Verformen der Folien muss die Schutzfolie abgezogen werden, dann können diese Folien hinterspritzt werden. Weiters können nicht transferierte Dekorfolien eingesetzt werden die zum Beispiel aus einem Metallkunststoffverband bestehen.

Insbesondere naturgetreue Metalldekore sind jedoch mit dieser Art von Folien nicht herstellbar.

Bekannte Metall-Kunststoff-Verbundkörper werden insbesondere dort eingesetzt, wo ein niedriges Eigengewicht angestrebt wird. Der Spritzgießprozess ermöglicht dabei die Herstellung komplex geformter Kunststoffteile mit Hinterschneidungen, variablen Wanddicken oder Stegansätzen, so dass ein solches Kunststoffträgerteil verschiedene Funktionen des Verbundkörpers übernehmen kann. Hinsichtlich ihres Aussehens erfüllen Kunststoffkörper in der Regel nicht die hohen Anforderungen, die an eine dekorative Oberfläche gestellt werden. Für Zierteile werden Kunststoffkörper daher mit entsprechenden Dekoren an den sichtbaren Oberflächen versehen. So werden beispielsweise beim Spritzgießen durch Einlegen von bereits dekorierten, umgeformten und beschnittenen Blechhalbzeugen in das Spritzgusswerkzeug dekorative Verbundbauteile hergestellt. Die dekorierten Blechteile bilden am fertigen Bauteil die optische Oberfläche, welche einfarbig, mit Metallic-Effekt, bis hin zu mehrfarbigen Dekoren und mit zusätzlichen Symbolen ausgeführt sein kann. Die Dekorschicht wird durch ein vorheriges Bedrucken des Blechteils erhalten. Nachteilig bei dem bekannten Verfahren ist, dass die Dekorschicht beim Hinterspritzen leicht beschädigt wird. Darüber hinaus erfüllen Metall-Kunststoff-Verbundkörper nicht die zusätzlichen Anforderungen hinsichtlich der UV-Beständigkeit und Korrosionsbeständigkeit, die an Zierteile im Außenbereich, insbesondere bei Kraftfahrzeugen, gestellt werden.

Aus DE 199 34 545 C1 ist ein Verfahren zur Herstellung eines Metall-Kunststoff-Verbundteils offenbart. Hierbei wird durch Spritzgießen ein Formschluss zwischen dem Kunststoff und einer vorbehandelten Metallplatine erzielt. Nachteilig an einem solchen Verfahren ist die unzureichende Verbundfestigkeit zwischen dem Metall und dem Kunststoff und die Notwendigkeit entsprechende Hinterschneidungen für den Formschluss vorzusehen.

Eine hinterschneidungsfreie Ausgestaltung der Verbindung zwischen Metallkomponente und Kunststoffkomponente zeigt die deutsche Offenlegungsschrift DE 103 46 097 A1. Hier wird eine Verbindung zwischen Metallkomponente und Kunststoffkomponente mittels eines Haftvermittlers erzielt. Der Haftvermittler wird vor dem Hinterspritzen aufgetragen und durch Erwärmen der Metallkomponente nach dem Spritzgießen aktiviert. Diese Erwärmung kann mittels Induktion oder Widerstandsheizen erfolgen, z. B. indem das gespritzte Verbundteil dem Spritzgusswerkzeug entnommen wird und durch eine Induktionsspule geführt wird. Dieser Vorgang funktioniert nur reibungslos, wenn bereits eine Formschlussverbindung zwischen dem Blechteil und dem Kunststoffmaterial besteht. Darüber hinaus ist kein Verfahren zur Herstellung eines Zierteils gezeigt.

Zierteile aus einem Metall-Kunststoff-Verbundkörper und ein Verfahren zu deren Herstellung werden in der deutschen Offenlegungsschrift DE 199 14 092 A1 beschrieben. Hierzu werden mit einer dekorativen Oberfläche versehene Blechteile, die rückseitig mit einer Kopplungsschicht beschichtet sind, in ein Spritzgusswerkzeug eingelegt und mit einem duroplastischen Kunststoff hinterspritzt. Nachteilig bei diesem Verfahren ist, dass ausschließlich Zierteile für den Innenbereich erzielt werden können, an die keine hohen Anforderungen hinsichtlich der Korrosionsbeständigkeit und UV-Beständigkeit gestellt werden können.

Aus der DE 20 2005 010946 U ist ein dekoratives Zierteil bestehend aus einem Kunststoff-Metall-Verbundkörper, bei dem ein dünnes Metall-Blechteil den dekorativen Bereich der Oberfläche des Verbundkörpers bildet und ein aus Kunststoff hergestelltes Teil als funktionales Trägerteil des Verbundkörpers dient, bekannt, wobei das Metall-Blechteil aus Aluminium und/ oder einer Aluminiumlegierung gebildet ist, dessen Innenseite mit dem KunststoffTrägerteil verbunden ist und dessen Außenseite eine Oberfläche besitzt, die ein dekoratives, metallisch wirkendes Aussehen aufweist und verdichtet ist, das Kunststoffteil aus einem wärmebeständigen Kunststoff besteht und eine alterungsbeständige stoffschlüssige Verbindung zwischen dem Metall-Blechteil und dem Kunststoff besteht, die durch Aktivierung eines wärme- und chemikalienbeständigen Haftvermittlers vor dem Hinterspritzen und durch Reaktion des Haftvermittlers beim Herstellen des Verbundes durch Hinterspritzen sowie durch Reaktion des Haftvermittlers bei der nachfolgenden chemischen Oberflächenbehandlung bewirkt worden ist.

Aufgabe der Erfindung war es, direktdekorierte verformbare bzw. bahnförmige Laminate bereitzustellen, die hinterspritzt werden können und originalgetreue Metalldekore aufweisen.

Gegenstand der Erfindung sind daher hinterspritzbare Folien bzw. bahnförmige Laminate, aufweisend eine aufweisende eine Trägerfolie die mit einer Dekorbeschichtung oder einer beschichteten Dekorfolie versehen ist und/oder mit einer Schutzlackschicht versehen ist und durch Pressformen in die gewünschte Form gebracht ist.

Die Dekorfolie kann vorzugsweise aus PMMA, PC, PS, PET, oder ABS, PP, PU bestehen. Diese Folien können strukturiert sein beispielsweise geprägt, gebürstet, mechanisch bearbeitet oder geschliffen sein.
Die Dicke der Dekorfolie beträgt etwa 6 bis 500 µm.

Die Trägerfolie kann aus gleichem oder unterschiedlichem Material bestehen wie die Dekorfolie, wobei das Material der Trägerfolie an das zu hinterspritzende Grundmaterial angepasst ist. Besonders geeignet sind Kunststofffolien wie PMMA, PC, PS, PET oder ABS, PP, PU. Die Dicke der Trägerfolie beträgt etwa 50 - 800 µm, vorzugsweise 150 - 500 µm.

Die Dekorfolie, oder die Trägerfolie selbst wird beispielsweise mit einer metallischen Beschichtung versehen, die vollflächig oder partiell aufgebracht sein kann.
Die Folie wird dazu vorerst mittels eines Inline-Plasma- (Niederdruck- oder Atmosphärenplasma-), Corona- oder Flammprozesses behandelt. Durch energiereiches Plasma wird die Oberfläche gereinigt.
Gleichzeitig wird die Oberfläche aktiviert. Dabei werden endständige polare Gruppen an der Oberfläche erzeugt. Dadurch wird die Haftung von Metallen und dergleichen an der Oberfläche verbessert.

Gegebenenfalls kann gleichzeitig mit der Anwendung der Plasma- bzw. Corona- oder Flammbehandlung eine dünne Metall- oder Metalloxidschicht als Haftvermittler, beispielsweise durch Sputtern oder Aufdampfen aufgebracht werden. Besonders geeignet sind dabei Cr, Al, Ag, Ti, Cu, TiO₂, Si-Oxide oder Chromoxide. Diese Haftvermittlerschicht weist im allgemeinen eine Dicke von 0,1 nm - 10 nm, vorzugsweise 0,2 nm - 2 nm, besonders bevorzugt 0,2 bis 1 nm auf.

Dadurch wird die Haftung der partiell oder vollflächig aufgebrachten gegebenenfalls strukturierten metallischen Schicht weiter verbessert. Das ist Voraussetzung für die Erzeugung von metallischen, funktionellen oder dekorativen Schichten mit hoher Präzision und guter Haftung.

Anschließend wird die eigentliche dekorative Schicht aufgebracht. Die dekorative Schicht kann zusätzlich funktionelle Eigenschaften aufweisen zum Beispiel: elektrische Leitfähigkeit, magnetische oder elektrostatische Eigenschaften. Diese Schicht besteht aus einem Metall, einer Metallverbindung,oder einer Legierung. Als Metallschicht sind Schichten aus Al, Cu, Fe, Ag, Au, Cr, Ni, Zn, Pd, Pt, Sn und dergleichen geeignet. Als Metallverbindungen sind beispielsweise Oxide oder Sulfide von Metallen, insbesondere TiO₂, Cr-Oxide, ZnS, ITO, ATO, FTO, ZnO, Al₂O₃ oder Siliciumoxide geeignet. Geeignete Legierungen sind beispielsweise Cu-Al Legierungen, Cu-Zn Legierungen und dergleichen.

Diese Schicht kann durch bekannte Verfahren, beispielsweise durch Bedampfen, Sputtern, Walzenauftragsverfahren, Drucken (Tief-, Flexo-, Sieb-, Digitaldruck und dergleichen), Sprühen, Galvanisieren, PVD- oder CVD-Verfahren und dergleichen aufgebracht werden.

Eine partielle Metallisierung kann durch partielle Metallisierungsverfahren, wie partiellen Auftrag einer hochpigmentierten Farbe vor dem Metallisierungsvorgang und Ablösen dieser Farbschicht gemeinsam mit der darauf aufgebrachten Metallschicht, durch Verwendung einer Maske, durch Ätzvorgänge oder Laserabtrag und dergleichen erfolgen.

Ferner können auch andere Schichten mit optischen oder optisch aktiven Eigenschaften aufgebracht sein.
Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind in allen möglichen Kombinationen einsetzbar. Zusätzlich können auch beispielsweise phosphoreszierende Pigmente allein oder in Kombination mit anderen Farbstoffen und/oder Pigmenten eingesetzt werden.

Die erforderliche Duktilität wird durch Strukturierung der metallischen Schicht erreicht, d.h. die Dicke der Metallschicht wird auf die gewünschte Verformung und an das gewünschte Design angepasst.

Die Schichtdicke kann dabei dann so gewählt werden, dass definierte Lichttransmission möglich ist. Dadurch können die Folien bzw. Laminate hinterleuchtbar oder durchleuchtbar gestaltet werden.
Es ist jedoch auch möglich eine opake, völlig deckende Metallschicht aufzubringen, durch die keine Lichttransmission erfolgen kann.
Die Schichtdicke der metallischen Schicht(Gradient, stufen) kann innerhalb der Dekorschicht variieren.

In einer Ausführungsform werden Trägerfolie und Dekorfolie miteinander durch ein Klebesystem, das für den Verbund aus thermoplastischen Folien und duroplastischen Folien entwickelt wurde, verbunden.
Das Klebesystem ist vorzugsweise ein 2-Komponenten-Klebesystem.
Dadurch hält der Laminatverbund chemischen und physikalischen Beanspruchungen stand.

In einer weiteren Ausführungsform kann die metallisierte Dekorfolie bzw. die Trägerfolie mit einem bedruckfähigen Hardcoat - (Schutzlack)überzug versehen sein. Dieser Schutzlack besteht vorzugsweise aus einer Mischung aus einer UV- oder thermisch vernetzbaren Acrylat/Polyurethanmischung.

Der Schutzlack ist bedruckbar und kann in einem üblichen Druckverfahren, beispielsweise im Tief-, Siebdruck oder Tampondruck mit einer geeigneten gewünschten Bedruckung versehen werden.

Die Folie bzw. der Folienverbund wird durch Pressformen in die entsprechende Form gebracht, wobei Kaltpress- oder Warmpressverfahren angewendet werden können.
Diese Vorformlinge werden anschließend ausgestanzt oder ausgeschnitten(mechanisch oder durch Laser). Die so erzeugten Stanzteile werden in eine Spritzgießform eingelegt und auf bekannte Weise hinterspritzt.

Die erfindungsgemäßen Folien können für Gebrauchsgegenstände, Haushaltsgeräte, Spielwaren, Sportartikel, für Kfz-Teile und dergleichen eingesetzt werden.
Die Folien weisen eine hohe Korrosions- und UV-Beständigkeit auf und können beispielsweise auch Zierteile, die galvanisch hergestellt werden ersetzen.

## Patentansprüche

1. Hinterspritzbare Folien bzw. bahnförmige Laminate, aufweisend eine Trägerfolie die mit einer Dekorbeschichtung oder einer beschichteten Dekorfolie versehen ist und/oder mit einer Schutzlackschicht versehen ist.

2. Hinterspritzbare Folien bzw. Laminate nach Anspruch 1, **dadurch gekennzeichnet dass** sie und durch Pressformen in die gewünschte Form gebracht sind.

3. Folien bzw. Laminate nach Anspruch 1 oder 2 , **dadurch gekennzeichnet, dass** die beschichtete Dekorfolie oder Trägerfolie eine metallische Beschichtung aufweist.

4. Folien bzw. Laminate nach einem der Ansprüche 1 bis 3, **dadurch gekennzeichnet, dass** die metallische Beschichtung opak ist.

5. Folien bzw. Laminate nach einem der Ansprüche 1 bis 4, **dadurch gekennzeichnet, dass** die metallische Beschichtung zumindest teilweise lichtdurchlässig ist.

6. Folien bzw. Laminate nach einem der Ansprüche 1 bis 5, **dadurch gekennzeichnet, dass** die Dicke der metallischen Beschichtung variiert.

7. Folien bzw. Laminate nach einem der Ansprüche 1 bis 6, **dadurch gekennzeichnet, dass** die Dekorfolie mit der Trägerfolie durch ein 2-Komponenten-Klebesystem verbunden ist.

8. Folien bzw. Laminate nach einem der Ansprüche 1 bis 7, **dadurch gekennzeichnet, dass** die Schutzlackschicht bedruckbar ist.

9. Verfahren zur Herstellung der Folien und Laminate gemäß den Ansprüche 1 bis 8, **dadurch gekennzeichnet, dass** eine Kunststofffolie beschichtet wird, ggf. mit einer Trägerfolie verbunden und/oder einer Schutzlackschicht versehen wird, worauf die Folie bzw. das Laminat durch Pressen verformt und anschließend ausgestanzt oder ausgeschnitten wird.

10. Verwendung der Folien bzw. Laminate für Gebrauchsgegenstände, Haushaltsgeräte, Spielwaren, Sportartikel und für Kfz-Teile.
